# EUROPÄISCHE PATENTSCHRIFT

(11) **EP 1 571 024 B1**
(45) Veröffentlichungstag und Bekanntmachung des Hinweises auf die Patenterteilung: **31.12.2008**
(21) Anmeldenummer: 05101534.5
(22) Anmeldetag: 01.03.2005
(51) Int. Cl.: B60H 3/06, F24F 3/16, B01D 46/42, B01D 46/46

(54) **Verfahren zum Reinigen von Atmosphärenluft**
Process for cleaning atmospheric air
Procédé pour purifier de l'air atmosphérique

(30) Priorität: 05.03.2004 CH 3712004
(43) Veröffentlichungstag der Anmeldung: 07.09.2005
(73) Patentinhaber: ATMOSCLEAN Systems AG, 8808 Pfäffikon SZ (CH)
(72) Erfinder: Cyffka, Klaus G., 8247, Flurlingen (CH)
(74) Vertreter: Breiter, Heinz

(56) Entgegenhaltungen:
- EP-A- 1 082 990
- JP-A- 4 297 341
- US-A- 5 509 853
- US-A1- 2003 203 712
- PATENT ABSTRACTS OF JAPAN Bd. 0165, Nr. 24 (C-1000), 28. Oktober 1992 (1992-10-28) & JP 04 197341 A (RES DEV CORP OF JAPAN), 16. Juli 1992 (1992-07-16)

## Beschreibung

Die Erfindung betrifft ein Verfahren zum Reinigen von mit Schadstoffen beladener Atmosphärenluft mit einem eine Lufteintrittsöffnung für die zu reinigende Atmosphärenluft und eine Luftaustrittsöffnung für die gereinigte Atmosphärenluft aufweisenden Filtersystem, wobei die Schadstoffe in im Filtersystem angeordneten Schadstofffiltern zurückgehalten werden, wobei zur Erzeugung einer Luftströmung durch die Schadstofffilter die Lufteintrittsöffnung des Filtersystems quer zu einem Atmosphärenluftstrom ausgerichtet wird, wobei der Atmosphärenluftstrom ein natürlicher Luftstrom oder ein durch Bewegen des Filtersystems erzeugter Gegenluftstrom ist.

Die Belastung der Atmosphäre mit gesundheitsschädlichen Partikeln aller Art steigt unaufhörlich an. Die Bemühungen von Regierungen, das Problem einer zunehmenden Luftverschmutzung durch Industrie- und Motorfahrzeugabgase auf dem Gesetzesweg über strengere Abgasnormen zu lösen, zeigen nicht die erhoffte Wirkung.

Bei vielen bekannten Verfahren zur Reinigung von mit Schadstoffen beladener Luft wird mittels entsprechend angeordneter Saug- oder Druckpumpen eine Zwangsströmung der zu reinigenden Luft durch eine Filteranordnung erzeugt. Eine nachhaltige Reinigung der Atmosphärenluft durch den Einsatz der bekannten Filterreinigungsverfahren macht eine sehr grosse Anzahl von Filteranordnungen mit einer ebenso grossen Anzahl Pumpen erforderlich.

Einer aktiven Reinigung der Atmosphärenluft über Filtersysteme stehen energetische Überlegungen insofern entgegen, als den heute bekannten Systemen zu deren Betrieb von aussen kostbare Energie zugeführt werden muss. Zudem führt die Erzeugung der zusätzlich benötigten Energie selbst wieder zu einer Zunahme der Umweltbelastung.

Ein anderes Verfahren und ein darauf beruhendes Filtersystem zur Reinigung von verschmutzter Umgebungsluft ist in US 5,509,853 A beschrieben. Der Filter beinhaltet eine in einem Gehäuse angebrachte Eintrittsöffnung und einen Auslass, sowie einen integrierten Schadstofffilter. Die zu reinigende Luft gelangt durch die quer zum Luftstrom angebrachte Lufteintrittsöffnung in das Filtersystem. Die Luftströmung liegt entweder bereits vor (z.B. in Form von Wind) oder wird durch Bewegung des Filtersystems relativ zur stehenden Luft erzeugt (z.B. bei Fahrzeugen). Das Filtersystem kann ortsgebunden sein und durch eine Windfahne relativ zum Luftstrom ausgerichtet werden. Ebenfalls offenbart ist ein in ein Fahrzeug integriertes Filtersystem. Die im Filtersystem angeordneten Schadstofffilter sind austauschbar.

Der Erfindung liegt die Aufgabe zugrunde, ein möglichst effizientes, umweltschonendes und kostengünstiges Verfahren zur Reinigung von Atmosphärenluft zu schaffen, welche mit unterschiedlichen Schadstoffen belastet ist

Zur erfindungsgemässen Lösung der Aufgabe führt ein Verfahren der eingangs genannten Art, bei welchem ein Filtersystem verwendet wird, welches mehrere in Serie geschaltete Schadstofffilter umfasst und nach jedem Schadstofffilter Messzellen mit zur Messung der Messinstrumenten Wirkungsgrad der einzelnen Filterstufen angebracht sind.

Unter dem Begriff "Schadstofffilter" werden hier alle Mittel verstanden, die dazu geeignet sind, der Atmosphärenluft die in ihr enthaltenen Fremdstoffe zu entziehen.

Bei einer ersten Ausführungsform des erfindungsgemässen Verfahrens ist das Filtersystem ortsgebunden und wird vorzugsweise mittels einer Windfahne automatisch in die Richtung des natürlichen Luftstromes ausgerichtet.

Unter dem Begriff "Windfahne" wird hier jedes Mittel verstanden, das sich parallel zu einer Luftströmung einstellt. Dieses Filtersystem kann freistehend oder an stationären Objekten wie z.B. Gebäuden, Bäumen, Sende-, Strom- und Laternenmasten montiert eingesetzt werden.

Bei einer zweiten Ausführungsform des erfindungsgemässen Verfahrens ist das Filtersystem an einem Fahrzeug festgelegt und der Gegenluftstrom wird durch die Fortbewegung des Fahrzeuges erzeugt.

Unter dem Begriff "Fahrzeug" wird hier jede Art von Transportmitteln verstanden, die sich auf dem Land, im Wasser und in der Luft fortbewegen, insbesondere Strassen- und Schienenfahrzeuge, Schiffe sowie Flugzeuge.

Bevorzugt sind die im Filtersystem angeordneten Schadstofffilter austauschbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine teilweise geschnittene Seitenansicht eines ortsgebundenen Filtersystems mit Windfahne;
- Fig. 2 die teilweise geschnittene Seitenansicht eines Lastkraftwagens mit integriertem Filtersystem;
- Fig. 3 einen Längsschnitt durch ein erstes Filtersystem;
- Fig. 4 einen Längsschnitt durch ein zweites Filtersystem.

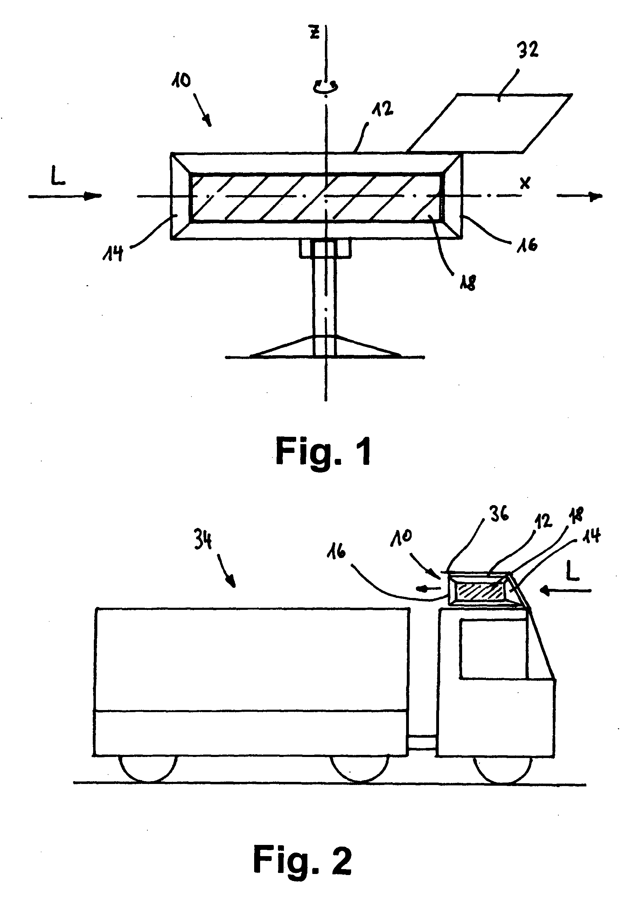

Eine in Fig. 1 gezeigte stationäre Anordnung eines Filtersystems 10 weist ein Filtergehäuse 12 mit einer Lufteintrittsöffnung 14 und einer Luftaustrittsöffnung 16 auf. Im Filtergehäuse 12 erstreckt sich ein austauschbares, ein geeignetes Filtermedium enthaltendes Filtermodul 18 von der Lufteintrittsöffnung 14 zur Luftaustrittsöffnung 16.

Das Filtergehäuse 12 ist um eine Vertikalachse z frei drehbar gelagert und die Gehäuselängsachse x ist horizontal ausgerichtet. Mit dem Filtergehäuse 12 ist im Bereich der Luftaustrittsöffnung 16 eine zur Gehäuselängsachse x parallele Windfahne 32 starr verbunden. Damit wird das Filtergehäuse 12 selbsttätig entgegen der Richtung eines ankommenden Luftstromes L ausgerichtet, so dass die Lufteintrittsöffnung 14 immer quer zum Luftstrom L liegt, d.h. vom Luftstrom rechtwinklig angeströmt wird.

Ein in Fig. 2 gezeigter Lastkraftwagen 34 weist einen Dachspoiler 36 mit einem in diesem integrierten Filtersystem 10 auf. Die Lufteintrittsöffnung 14 des Filtergehäuses 12 ist im Frontbereich des Dachspoilers 36 und die Luftaustrittsöffnung16 an dessen Rückseite angeordnet. Der bei einer Vorwärtsbewegung des Lastkraftwagens 34 als Fahrtwind erzeugte Luftstrom L ist stets parallel zur Filtergehäuseachse x ausgerichtet.

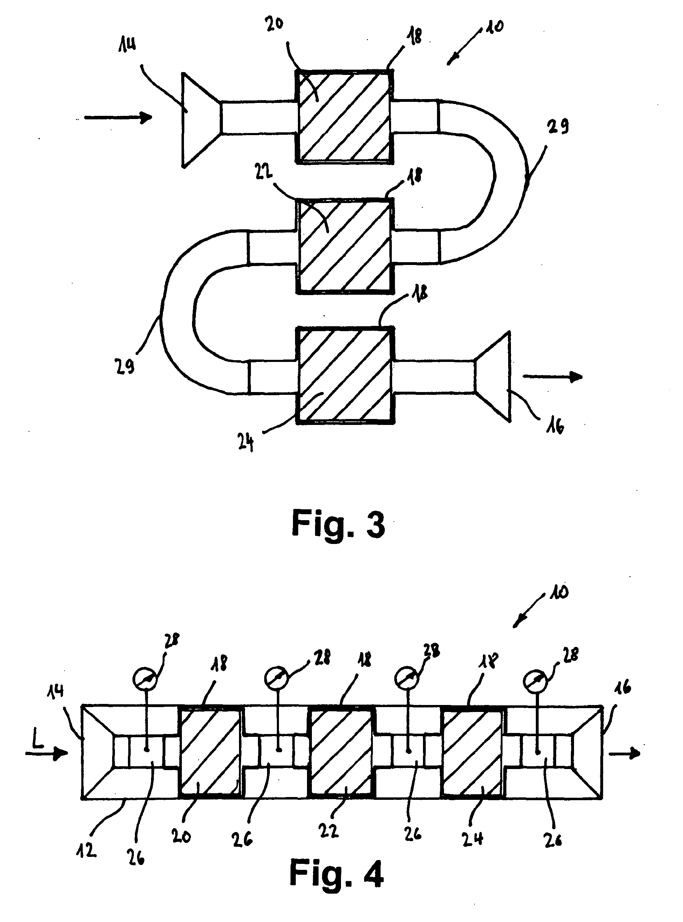

Ein in Fig. 3 dargestelltes flexibles Filtersystem 10 umfasst drei hintereinander geschaltete, ein Filtermedium enthaltende Filtermodule 18. Das der Lufteintrittsöffnung 14 am nächsten liegende Modul enthält als Filtermedium ein Vorstufenfilter 20 zum Ausfiltern von Grobpartikeln, das nachfolgende Modul ein Zwischenfilter 22 zum Ausfiltern von mittelgrossen Partikeln und das dritte, der Luftaustrittsöffnung 16 am nächsten liegende Modul ein Endstufenfilter 24 zum Ausfiltern von feinen Partikeln. Die einzelnen Module 18 sind über flexible Rohr- oder Schlauchverbindungen 29 miteinander verbunden und eignen sich daher auch für den Einbau an Stellen mit beschränkt zur Verfügung stehendem Raum wie z.B. in den Motorraum eines Personenkraftwagens.

Ein in Fig. 4 dargestelltes Filtersystem 10 umfasst ein rohrförmiges Filtergehäuse 12, an dessen Enden die Lufteintrittsöffnung 14 und die Luftaustrittsöffnung 16 angeordnet sind. Drei in Serie geschaltete Filtermodule 18 mit einem Vorstufenfilter 20, einem Zwischenstufenfilter 22 und einem Endstufenfilter 24 sind über zwischengeschaltete Messzellen 26 mit zugehörigen Messinstrumenten 28 unter Bildung eines von der Lufteintrittsöffnung 14 zur Luftaustrittsöffnung 16 sich erstreckenden Luftströmungskanals miteinander verbunden. Über die Messzellen 26 kann der Wirkungsgrad der einzelnen Filterstufen gemessen und aus den Messwerten die optimale Filterauswahl getroffen werden.

Bei Bedarf könne vor, nach, oder zwischen den einzelnen Filterstufen 20, 22, 24 weitere Filterstufen vorgesehen werden. Als Beispiel sei hier etwa die Anordnung eines Sterilfilters zum Ausfiltern von feinsten Partikeln als Endstufenfilter 24 genannt.

Als Filter können alle für die Abluftreinigung bekannten Filtermedien verwendet werden, wobei jede Filterstufe eine oder mehrere individuelle Filtereinheiten enthalten kann. Die einzelnen Filtermodule sind bevorzugt austauschbar und können auf bekannte Weise für einen weiteren Einsatz gereinigt bzw. regeneriert werden.

Es sei an dieser Stelle erwähnt, dass die in der Zeichnung dargestellten und vorstehend beschriebenen Ausführungsbeispiele nur zur Erläuterung des erfindungsgemässen Verfahrens dienen und das erfindungsgemässe Verfahren in keiner Weise einschränken. Vielmehr umfasst das erfindungsgemässe Verfahren die Verwendung aller zur Reinigung von mit Schadstoffen belasteter Luft geeigneten Filtersysteme.

## Patentansprüche

1. Verfahren zum Reinigen von mit Schadstoffen beladener Atmosphärenluft mit einem eine Lufteintrittsöffnung (14) für die zu reinigende Atmosphärenluft und eine Luftaustrittsöffnung (16) für die gereinigte Atmosphärenluft aufweisenden Filtersystem (10), wobei die Schadstoffe in im Filtersystem (10) angeordneten Schadstofffiltern (18,20,22,24) zurückgehalten werden, wobei zur Erzeugung einer Luftströmung durch die Schadstofffilter (18,20,22,24) die Lufteintrittsöffnung (14) des Filtersystems (10) quer zu einem Atmosphärenluftstrom ausgerichtet wird, wobei der Atmosphärenluftstrom ein natürlicher Luftstrom oder ein durch Bewegen des Filtersystems (10) erzeugter Gegenluftstrom ist,
**dadurch gekennzeichnet, dass**
das Filtersystem (10) mehrere in Serie geschaltete Schadstofffilter (18, 20, 22, 24) umfasst und dass nach jedem Schadstofffilter (18, 20, 22, 24) Messzellen (26) mit Messinstrumenten (28) zur Messung der Wirkungsgrade der einzelnen Filterstufen angebracht sind.

2. Verfahren nach Anspruch 1, **dadurch gekennzeichnet, dass** das Filtersystem (10) ortsgebunden ist und automatisch, vorzugsweise mittels einer Windfahne (28), auf die Richtung des natürlichen Luftstroms ausgerichtet wird.

3. Verfahren nach Anspruch 1, **dadurch gekennzeichnet, dass** das Filtersystem (10) an einem Fahrzeug (30) festgelegt ist und der Gegenluftstrom durch die Fortbewegung des Fahrzeuges (30) erzeugt wird.

4. Verfahren nach einem der Ansprüche 1 bis 3, **dadurch gekennzeichnet, dass** die im Filtersystem (10) angeordneten Schadstofffilter (18,20,22,24) austauschbar ist/sind.

## Claims

1. Method for the purification of pollutant-laden atmospheric air by means of a filter system (10) having an air inlet port (14) for the atmospheric air to be purified and an air outlet port (16) for the purified atmospheric air, the pollutants being retained in pollutant filters (18, 20, 22, 24) arranged in the filter system (10), the air inlet port (14) of the filter system (10) being oriented transversely with respect to an atmospheric-air stream in order to generate an air flow through the pollutant filters (18, 20, 22, 24), the atmospheric-air stream being a natural air stream or a counterflow air stream generated as a result of the movement of the filter system (10), **characterized in that** the filter system (10) comprises a plurality of series-connected pollutant filters (18, 20, 22, 24), and **in that** measuring cells (26) with measuring instruments for measuring the efficiencies of the individual filter stages are mounted downstream of each pollutant filter (18, 20, 22, 24).

2. Method according to Claim 1, **characterized in that** the filter system (10) is stationary and is oriented in the direction of the natural air stream automatically, preferably by means of a wind vane (28).

3. Method according to Claim 1, **characterized in that** the filter system (10) is secured to a vehicle (30), and the counterflow air stream is generated as a result of the forward movement of the vehicle (30).

4. Method according to one of Claims 1 to 3, **characterized in that** the pollutant filters (18, 20, 22, 24) arranged in the filter system (10) are exchangeable.

## Revendications

1. Procédé de purification d'air atmosphérique chargé en substances nocives, qui présente un système de filtration (10) doté d'une ouverture d'entrée (14) pour l'air atmosphérique à purifier et d'une ouverture de sortie (16) pour l'air atmosphérique purifié, les substances nocives étant retenues dans des filtres (18, 20, 22, 24) à substances nocives disposés dans le système de filtration (10), et dans lequel, pour former un écoulement d'air à travers les filtres (18, 20, 22, 24) à substances nocives, l'ouverture (14) d'entrée d'air du système de filtres (10) est orientée transversalement par rapport à un écoulement d'air atmosphérique, l'écoulement d'air atmosphérique étant un écoulement d'air naturel ou un contre-écoulement d'air formé par déplacement du système de filtration (10),
**caractérisé en ce que**
le système de filtration (10) comprend plusieurs filtres (18, 20, 22, 24) à substances nocives raccordés en série et
**en ce que** des cellules de mesure (26) dotées d'instruments de mesure (28) qui mesurent le taux d'efficacité des différents étages de filtres sont installées en aval de chaque filtre (18, 20, 22, 24) à substances nocives.

2. Procédé selon la revendication 1, **caractérisé en ce que** le système de filtration (10) est fixe et est aligné automatiquement, de préférence au moyen d'une girouette (28), sur la direction de l'écoulement d'air naturel.

3. Procédé selon la revendication 1, **caractérisé en ce que** le système de filtration (10) est fixé sur un véhicule (30) et **en ce que** le contre-écoulement d'air est formé par l'avancement du véhicule (30).

4. Procédé selon l'une des revendications 1 à 3, **caractérisé en ce que** les filtres (18, 20, 22, 24) à substances nocives disposés dans le système de filtration (10) sont remplaçables.
